# EUROPÄISCHE PATENTANMELDUNG

(11) **EP 2 168 894 A2**
(43) Veröffentlichungstag der Anmeldung: **31.03.2010**
(21) Anmeldenummer: 09405159.6
(22) Anmeldetag: 18.09.2009
(51) Int. Cl.: B65H 5/12, B65H 29/04, B65H 29/06

(54) **Vorrichtung und Verfahren zur Bearbeitung von Gegenständen**

(30) Priorität: 25.09.2008 CH 15232008
(71) Anmelder: Ferag AG, 8340 Hinwil (CH)
(72) Erfinder: Stauber, Hans Ulrich, 8624 Grüt (CH)
(74) Vertreter: Frei Patent Attorneys

(57) **Zusammenfassung**

Die Erfindung betrifft eine Vorrichtung (10) und ein Verfahren zur Bearbeitung von Gegenständen (100, 110) mit einer Mehrzahl von Werkzeugen (20) sowie mit einem Werkzeug-Antriebsmittel (30). Die Werkzeuge (20) umfassen jeweils wenigstens einen Hebel (21) sowie ein Wirkelement (22), das mit dem Gegenstand (100, 110) zusammenzuwirken kann. Die Hebel (21) sind am Werkzeug-Antriebsmittel (30) an Lagerpunkten (23) schwenkbar angebracht und können durch Bewegung des Werkzeug-Antriebsmittels (30) entlang einer geschlossenen Umlaufbahn angetrieben werden. Die Wirkelemente (22) sind vom Lagerpunkt (23) beabstandet. Mit einem Führungsmechanismus (40) kann die Schwenkposition der Hebel (21) relativ zum Werkzeug-Antriebsmittel (30) in Abhängigkeit von ihrer Position entlang der Umlaufbahn eingestellt werden. Erfindungsgemäss ist der Führungsmechanismus (40) verstellbar, wobei durch die Verstellung unterschiedliche Abstände (d, d') benachbarter Wirkelemente (22) in einem vorbestimmten Referenzbereich realisierbar sind.

## Beschreibung

Die Erfindung liegt auf dem Gebiet der Bearbeitung oder dem Transport von Gegenständen, insbesondere von Druckereiprodukten. Sie betrifft eine Vorrichtung und ein Verfahren nach den Oberbegriffen der Ansprüche 1 und 13, bei der bzw. bei dem die Gegenstände mit entlang einer geschlossenen Umlaufbahn bewegten Wirkelementen bearbeitet werden und der Abstand der Wirkelemente beispielsweise zur Anpassung an unterschiedliche Formate oder Übergabestellen verändert werden soll.

Bei der Bearbeitung von kontinuierlich geförderten Gegenständen muss der Abstand der zur Bearbeitung verwendeten Werkzeuge häufig an den Abstand der Gegenstände im zugeführten und/oder abzugebenden Förderstrom angepasst werden. Hierzu sind verschiede Lösungen bekannt:

Aus der EP-A 0 606 550, EP-A 0 606 549 und EP-A 0 606 555 sind Bearbeitungs-und Transportvorrichtungen für Druckereiprodukte bekannt, bei denen Werkzeuge, z.B. Greifer oder Heftmodule, entlang einer im wesentlichen kreisförmigen Bahn bewegt werden und bei denen sich der Abstand der Werkzeuge während ihrer Bewegung entlang der Bahn ändert. Die Abstandsänderung wird erreicht, indem die Werkzeuge am äusseren Ende von Hebeln angeordnet sind und die Orientierung der Hebel relativ zur radialen Richtung durch Zusammenwirken mit geeignenten Steuer/Führungselementen während eines Umlaufs verändert wird.

Eine ähnliche Vorrichtung, die als Transferrad zum Vereinzeln kontinuierlich geförderter Gegenstände dient, ist aus EP-A 1 736 427 bekannt. Hier werden die Gegenstände an einer Übernahmestelle von Greifern übernommen und entlang einer kreisbogenartigen Umlaufbahn bis zu einer Abgabestelle bewegt werden, wo sie auf ein Förderband abgelegt werden. Der Abstand der Greifer entlang der Bahn vergrössert sich von der Übernahmestelle zur Abgabestelle. Die Greifer sind dazu am äusseren Ende von Hebeln angeordnet, deren innere Enden an einer kreisförmigen Antriebsscheibe angelenkt sind und deren Orientierung in Bezug auf die Antriebsscheibe durch Führungselemente, die mit den Hebeln zusammenwirken und entlang einer in Bezug auf die Antriebsscheibe exzentrischen Kreisbahn laufen, in Abhängigkeit von der Position des Hebels entlang der Umlaufbahn festgelegt wird.

Aus der WO 2007/147269 ist eine Vorrichtung zum Bearbeiten, insbesondere Schweissen oder Schneiden, von kontinuierlich hintereinander geförderten Gegenständen bekannt, bei dem wenigstens zwei Werkzeuge mit variablen Geschwindigkeiten entlang einer geschlossenen Umlaufbahn bewegt werden, um unterschiedliche Bearbeitungsabstände zu realisieren. Hierzu sind beispielsweise zwei Antriebe vorgesehen: Einer der Antriebe bewegt die Werkzeuge mit einer an die Fördergeschwindigkeit angepassten Bearbeitungsgeschwindigkeit und der andere Antrieb bewegt diese mit einer Rückführgeschwindigkeit, die an die zu erstellenden Abstände angepasst ist. Die WO 2007/147269 schlägt alternativ dazu vor, die Werkzeuge an einen kontinuierlich arbeitenden Antrieb wahlweise an- bzw. abzukoppeln und so unterschiedliche Bearbeitungsabstände zu realisieren.

Für viele Anwendungen ist es notwendig, den Abstand zweier Werkzeuge zu verändern, z.B. um eine Bearbeitung an die aktuelle Produktlänge anzupassen oder um den Abstand zweier von den Werkzeugen gehaltener Produkte zu verändern.

Obwohl sich beim Transferrad gemäss der EP-A 1 736 427 der Abstand zweier Greifer entlang der Umlaufbahn verändert, ist der Abstand zweier aufeinanderfolgender Greifer an einem beliebigen Referenzpunkt entlang der Umlaufbahn konstant. Der Abstand hängt also nur von der Position des Greifers entlang der Umlaufbahn ab. Eine Formatveränderung ist nur durch verschiedene Anpassungen möglich.

Die verschiedenen Antriebe bei der Vorrichtung gemäss WO 2007/147269 ermöglichen zwar eine Anpassung des Bearbeitungsabstandes, sind jedoch mechanisch aufwändig und wartungsintensiv.

Der Erfindung liegt daher die Aufgabe zugrunde, eine einfache Lösung zur Veränderung des Abstands der Werkzeuge bei einer Bearbeitungsvorrichtung anzugeben.

Die Aufgabe wird gelöst durch eine Vorrichtung mit den Merkmalen von Anspruch 1 sowie durch ein Verfahren mit den Merkmalen von Anspruch 13. Vorteilhafte Weiterbildungen ergeben sich aus den abhängigen Ansprüchen, der Beschreibung und den Zeichnungen.

Die erfindungsgemässe Vorrichtung umfasst eine Mehrzahl von Werkzeugen sowie ein Werkzeug-Antriebsmittel, wobei die Werkzeuge jeweils einen Hebel sowie ein Wirkelement, das mit dem Gegenstand zusammenzuwirken imstande ist, haben. Die Hebel sind am Werkzeug-Antriebsmittel an Lagerpunkten schwenkbar angebracht und können durch Bewegung des Antriebsmittels entlang einer geschlossenen Umlaufbahn bewegt werden. Die Wirkelemente sind in einem Abstand vom Lagerpunkt, also ausladend, angeordnet. Die Schwenkposition der Hebel relativ zum Werkzeug-Antriebsmittel ist variabel und wird mit einem Führungsmechanismus in Abhängigkeit von ihrer Position entlang der Umlaufbahn eingestellt. Es können beispielsweise entlang der Umlaufbahn konstante oder sich ortsabhängig verändernde Abstände realisiert sein. Erfindungsgemäss ist der Führungsmechanismus derart verstellbar ausgebildet, dass die Schwenkpositionen der Hebel für eine gegebene Position entlang der Umlaufbahn verändert werden kann. Damit können unterschiedliche Abstände benachbarter Wirkelemente in einem bestimmten Referenzbereich oder an einem bestimmten Referenzpunkt, z.B. in einem Bearbeitungsbereich oder an einer Bearbeitungsstelle, realisiert werden. Bevorzugt ist die Position des Führungsmechanismus relativ zum Werkzeug-Antriebsmittel veränderbar, vorzugsweise in dem der Führungsmechanismus verschiebbar ausgebildet ist. Es können aber auch andere Verstellmechanismen, beispielsweise unter Verwendung von Weichen, vorgesehen sein.

Die Erfindung beruht auf der veränderbaren Einstellung der Schwenkposition eines über einen Hebel am Werkzeug-Antriebsmittel ausladend angeordneten Wirkelements durch einen verstellbaren Fühnmgsmechanismus, bezogen auf einen bestimmten (aber an sich beliebigen) Referenzpunkt entlang der Bahn. Je nach Einstellung des Führungsmechanismus hat der Hebel daher an demselben Referenzpunkt unterschiedliche Orientierungen, so dass benachbarte Wirkelemente im entsprechenden Bereich unterschiedliche Abstände haben können. Durch geeignete Wahl der Geometrie, z.B. der Hebellänge, des Abstands der Lagerpunkte, Form und Lage des Führungsmechanismus, lassen sich verschiedene Abstände der Wirkelemente in einem Referenzbereich einstellen, ohne zwingend die Antriebsgeschwindigkeit verändern zu müssen. Die dazu notwendige Mechanik lässt sich in der Regel sehr einfach und wartungsarm realisieren, beispielsweise mittels verschiebbarer, mit den Hebeln mitlaufender Führungselemente und/oder verschiebbarer, aber ansonsten stationärer Führungskulissen oder Führungskulissen mit mehreren alternativen Führungswegen. Besonders stark ist der erzielte Effekt in gekrümmten Teilen der Bewegungsbahn der Werkzeuge bzw. der Lagerpunkte der ihnen zugeordneten Hebel, wobei es sich um eine konkave oder konvexe Bahnform handeln kann.

Unter "Bearbeitung" wird jegliches Einwirken auf den Gegenstand verstanden, insbesondere eine Veränderung des Gegenstands beispielsweise durch Schweissen, Heften, Bedrucken und/oder Schneiden, aber auch der blosse Transport des Gegenstands, beispielsweise Greifen, Mitnehmen und/oder Ablegen. Die zu bearbeitenden Gegenstände können einzeln sein, es kann sich aber auch um eine Materialbahn oder Materialbahn plus Gegenstände handeln, z.B. in einen Folienschlauch eingeschlagene Druckereiprodukte. Die Werkzeuge sind daher beispielsweise Schweiss-, Heft-, Druck- oder Schneidmodule oder Greifer; die mit dem Gegenstand zusammenwirkende aktive Zone wird als Wirkelement bezeichnet.

Durch die Erfindung ist es möglich, an einer bestimmten Referenzstelle bzw. in einem bestimmten Referenzbereich der Umlaufbahn unterschiedliche räumliche Abstände der Wirkelemente einzustellen. Mit anderen Worten kann der Abstand zweier aufeinanderfolgender Wirkelemente, die an einem Referenzpunkt vorbeilaufen, bei gleichbleibender Antriebsgeschwindigkeit des Werkzeug-Antriebsmittels vergrössert oder verkleinert werden. Hierdurch gelingt es auf einfache Weise, die Bearbeitung beispielsweise an unterschiedliche Produktformate oder unterschiedliche Produktabstände in einer zu erzeugenden Formation anzupassen.

Die Erfindung hat besondere Vorteile bei der Bearbeitung von Gegenständen, die in einem kontinuierlichen Strom gefordert werden, bei denen sich jedoch die Produktabstände oder die gewünschten Bearbeitungsabstände ändern können. Beispiele sind einerseits Bedrucken, Schweissen, Heften, Schneiden oder sonstiges Verändern von hintereinander durch einen Bearbeitungsbereich der Vorrichtung geförderten Produkten und/oder einer kontinuierlichen Materialbahn. Die Erfindung ermöglicht es hier, die Bearbeitungsabstände an die Produktabstände oder an sonstige Vorgaben anzupassen. Die Erfindung hat aber auch Vorteile bei der blossen Förderung von Produkten mit unterschiedlichen Produktabständen oder -längen, z.B. bei der Übernahme von Produkten aus einer zugeförderten Formation oder deren Abgabe in eine wegzufördernde Formation. Die Erfindung ermöglicht hier eine abstandsgerechte Übernahme oder Übergabe der Produkte bei gleichbleibender Förderrate.

Zusätzlich zur Anpassung der Abstände an einer bestimmten Referenzstelle kann die erfindungsgemässe Vorrichtung so ausgebildet sein, dass die Abstände zwischen zwei Wirkelementen - z.B. wie beim Stand der Technik gemäss EP-A 0 606 550. EP-A 0 606 549 oder EP-A 0 606 555 - über den gesamten Verlauf der Umlaufbahn allein durch das Zusammenspiel von Werkzeug-Antriebsmittel, Werkzeugen und fest eingestelltem Führungsmechanismus zwischen einem Minimal- und einem Maximalabstand variiert werden. Durch die Erfindung lassen sich bei einer solchen Vorrichtung der Minimal- und Maximalabstand in Abhängigkeit voneinander einstellen, so dass der Bereich der Abstandsänderung innerhalb gewisser Grenzen frei wählbar ist. Dies hat Vorteile beispielsweise bei der Vereinzelung von Produkte aus einer Schuppenformation oder für den umgekehrten Fall, in dem Produkte einzeln übernommen und zu einer Schuppenfomation komprimiert werden sollen.

Die Wirkelemente können aber auch über weite Teile der Umlaufbahn einen konstanten Abstand haben, der durch den verstellbaren Führungsmechanismus nur in einem Teilbereich der Umlaufbahn verkleinert oder vergrössert wird, beispielsweise um die Produkte in einem Übergabebereich vereinzelt hintereinander abzulegen. Der Führungsmechanismus kann in diesem Fall zum nur bereichsweisen Zusammenwirken mit den Werkzeugen ausgebildet sein.

Das Werkzeug-Antriebsmittel umfasst beispielsweise einen starreren Körper, der durch einen geeigneten Antrieb um eine Drehachse bewegt wird, z.B. eine Radscheibe, eine Speichenkonstruktion oder ein Ring. Die Lagerpunkte der Hebel beschreiben daher eine Kreisbahn und die Wirkelemente eine ungefähre Kreisbahn. Ein solches Antriebsmittel ist mechanisch einfach zu realisieren. Das Werkzeug-Antriebsmittel kann aber auch ein länglich-flexibles Förderorgan umfassen, z.B. eine Kette oder ein Riemen, an dem die Hebel angelenkt sind und das entlang einer durch geeignete Halteorgane/Führungsmittel, z.B. Schienen, Kanal, Umlenkrollen, definierten Bahn bewegt wird. Die Lagerpunkte laufen entlang einer Bahn, die im wesentlichen der Bahn des Förderorgans entspricht. In beiden Fällen befinden sich die Lagerpunkte der Hebel vorzugsweise, aber nicht zwingend, in konstanten Abständen voneinander an der bewegten Komponente des Werkzeug-Antriebsmittels.

Der Führungsmechanismus umfasst vorzugsweise eine Mehrzahl von Führungselementen, die mit den Hebeln zusammenwirken und die entlang einer Führungselemente-Umlaufbahn bewegbar sind. Die Führungselemente können aber auch fest mit dem Hebel verbunden sein und entlang einer veränderbaren Steuerkulisse laufen. In beiden Fällen ist die Form und/oder Lage der Führungselemente-Umlaufbahn relativ zur Position einer Lagerpunkte-Umlaufbahn durch Verstellen des Führungsmechanismus veränderbar. Hierzu ist eine geeignete Verstelleinrichtung vorgesehen, z.B. ein Linearmotor. Eine definierte Umlaufbahn der Führungselemente wird beispielsweise durch verschiebbare Steuerkulissen oder durch eine Lagerung an einem verschiebbaren Drehkörper realisiert.

Zur Reduktion von Freiheitsgraden können die Führungselemente selbst angetrieben sein, insbesondere synchron mit dem Werkzeug-Antriebsmittel. Dies ist insbesondere dann vorteilhaft, wenn die Führungselemente relativ zum Werkzeug verschiebbar sind. Als Führungselemente-Antriebsmittel kann beispielsweise analog zum Werkzeug-Antriebsmittel ein Drehkörper oder ein Förderorgan dienen, an dem die Führungselemente in definierten, insbesondere konstanten Abständen gelagert sind.

Beispiele der Erfindung sind in den Zeichnungen dargestellt und nachfolgend beschrieben. Es zeigen rein schematisch:
- Fig. 1+b: eine Bearbeitungsvorrichtung mit einem Wirkelemente-Antriebsmittel mit einem Drehkörper und Wirkelementen, die im Bearbeitungsbereich zwei verschiedenen Abständen aufweisen;
- Fig. 2a+b: Ansichten der Bearbeitungsvorrichtung aus Fig. 1a+b senkrecht zur Drehachse des Drehkörpers;
- Fig. 3: ein Detail des Führungsmechanismus;
- Fig.4a+b: eine weitere Bearbeitungsvorrichtung mit einem Wirkelemente-Antriebsmittel in Form eines Drehkörpers und Wirkelementen, deren Schwenkposition in Bezug auf das Hebelende durch zusätzliche Führungselemente variabel ist:
- Fig 5a+b, 6a+b: Anwendungsbeispiele für eine Vorrichtung gemäss Fig. 1a+b:
- Fig. 7+8: Beispiele für eine Bearbeitungsvorrichtung mit einem Förderorgan als Werkzeug-Antriebsmittel;
- Fig. 9: ein Beispiel für einen Verstellmechanismus 50.

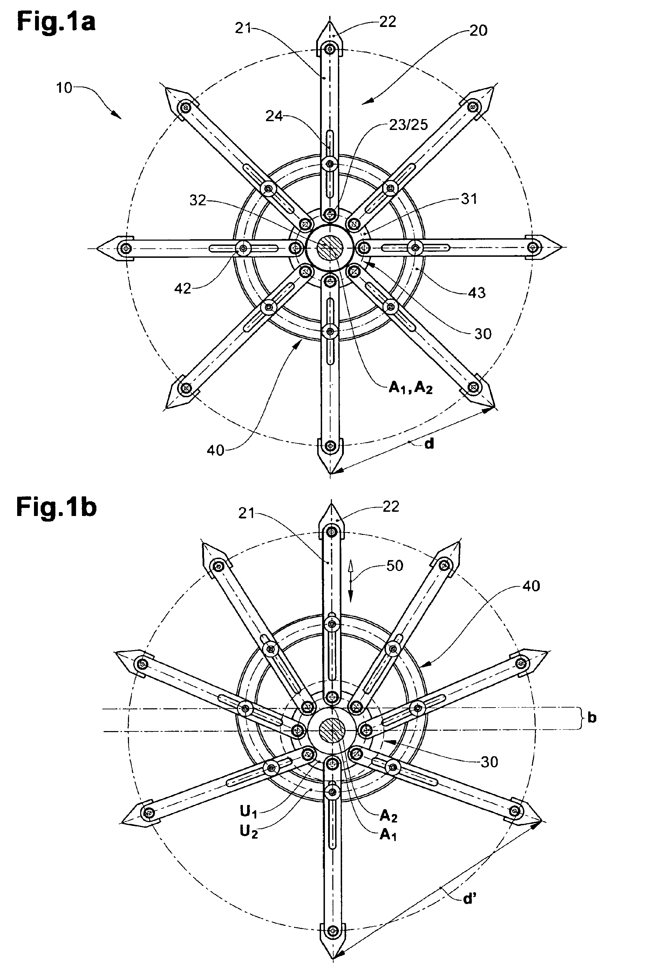

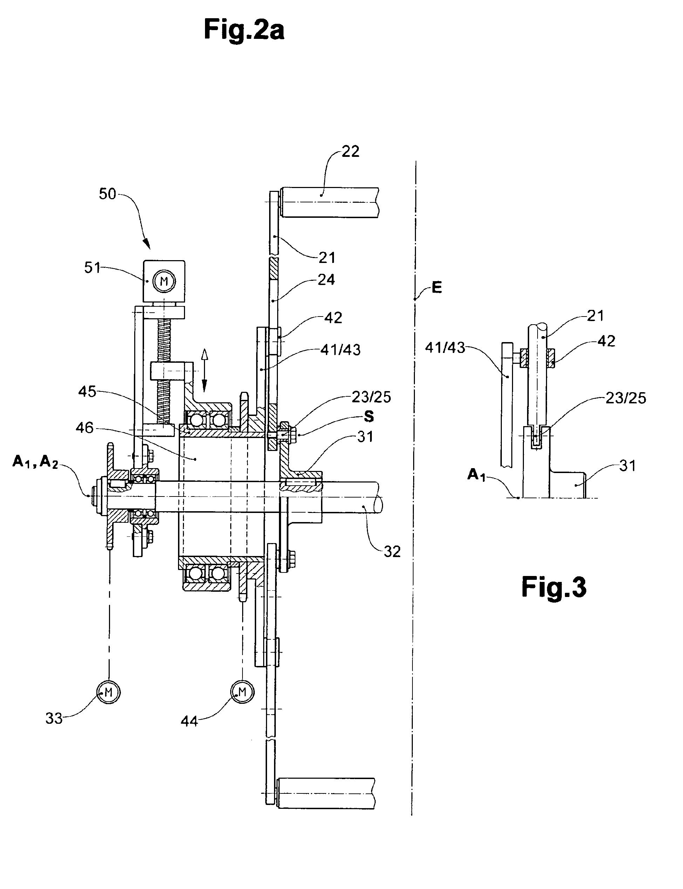

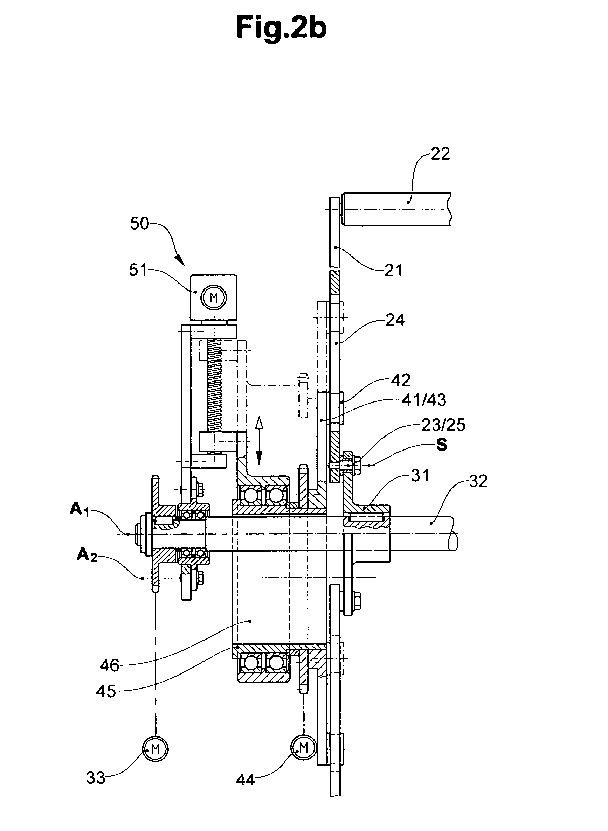

In den Fig. 1a+b und 2a+b ist ein erstes Beispiel einer erfindungsgemässen Bearbeitungsvorrichtung 10 dargestellt. Diese umfasst mehrere - hier acht - Werkzeuge 20, die an einem Werkzeug-Antriebsmittel 30 an Lagerpunkten 23 angebracht sind. Die Werkzeuge 20 umfassen jeweils wenigstens einen Hebel 21, der an seinem einen Ende nach Art eines Gelenks 25 schwenkbar mit dem Werkzeug-Antriebsmittel 30 verbunden ist. Die Werkzeuge 20 umfassen ausserdem ein Wirkelement 22 am anderen Hebelende. Das Werkzeug-Antriebsmittel 30 weist hier einen starren Rotationskörper 31 in Form einer Radscheibe auf, der mit einer koaxial zum Rotationskörper 31 angeordneten Antriebswelle 32 verbunden ist. Diese kann durch einen ersten Antrieb 33 in Drehung versetzt werden, so dass die Lagerpunkte 23 entlang einer kreisförmigen Umlaufbahn U1 bewegt werden. Die durch die Lagerpunkte 23 gehenden Schwenkachsen S der Hebel 21 verlaufen parallel zur Antriebswelle 32 bzw. zu deren Achse A1. Die Abstände benachbarter Lagerpunkte 23 entlang des Umfangs der Radscheibe 31 sind konstant.

Zur Einstellung der Schwenkposition der Hebel 21 relativ zum Rotationskörper 31 dient ein Führungsmechanismus 40. Dieser umfasst Führungselemente 42, die mit den Werkzeugen 20 zusammenwirken, sowie ein Führungselemente-Antriebsmittel 41 mit einem starren Rotationskörper 43, hier einer weiteren Radscheibe, und einem entsprechenden Antrieb 44. Die Führungselemente 42, hier Führungsrollen, die in Langlöchern 24 in den Hebeln 21 verschiebbar sind, sind in konstanten Abständen an der weiteren Radscheibe 43 befestigt. Sie werden durch die Bewegung des Rotationskörpers 43 entlang einer kreisförmigen Umlaufbahn U2 bewegt.

Wie Fig. 2a+b zeigt, hat der Rotationskörper 43 eine Hohlwelle 45 mit einem zylindrischen Lumen 46 und einer Achse A2. Innerhalb des Lumens 46 verläuft die Antriebswelle 32 des Werkzeug-Antriebsmittels 30 in einem Abstand von der Innenwandung der Hohlwelle 45. Der Abstand b der Achsen A1, A2 von Antriebswelle 32 und Hohlwelle 45 kann mittels einer Verstelleinrichtung 50 variiert werden, um verschiedene relative Lagen der beiden Rotationskörper 31, 43 zu realisieren.

Die am Gehäuse der Vorrichtung ortsfest gelagerte Verstelleinrichtung 50 umfasst einen Antrieb 51, der mit der Hohlwelle 45 gekoppelt ist und diese senkrecht zur Antriebswelle32, hier in vertikale Richtung, verstellen kann.

Wie Fig. 2a+b zeigt, können die Wirkelemente 22 eine längliche Ausdehnung in Richtung der Antriebswelle 32 haben. Die in Fig. 2 gezeigte Teil-Vorrichtung ist daher vorzugsweise spiegelbildlich zur mit E bezeichneten Symmetrieebene gestaltet. Die Wirkelemente 22 sind an beiden Enden durch jeweils einen Hebel 21 und einen entsprechenden Rotationskörper 31 gestützt.

Die Bearbeitungsvorrichtung 10 funktioniert wie folgt: Mit der Verstelleinrichtung 50 wird der Abstand b der beiden Achsen A1, A2 eingestellt. Fig. 1a und 2a zeigen beispielsweise den Fall b=0, d.h. übereinstimmende Achsen A1. A2 und damit koaxiale Rotationskörper 31, 43. Fig. 1b und 2b zeigen den Fall b≠0, d.h. in horizontaler Richtung parallel verschobene Achsen A1, A2 und damit exzentrisch zueinander gelagerte Rotationskörper 31, 43. Je nach relativer Lage der Rotationskörper 31, 43 wird die Schwenkposition der Hebel 21 um ihre Lagerpunkte 23 in Abhängigkeit von ihrer Position entlang der Umlaufbahn U1 vorgegeben. Im Fall von Fig. 1a sind die Hebel 21 radial orientiert und die Abstände d zwischen den Wirkelementen 22 konstant. Im Fall von Fig. 1b weicht die Hebelorlentterung von der radialen Richtung ab, so dass sich im oberen Bereich der Umlaufbahn U1 kleinere und im unteren Bereich der Umlaufbahn U1 grössere Abstände d' zwischen den Wirkelementen 22 einstellen. Der grösste bzw. kleinste Abstand d' kann durch Variation des Achsabstands b variiert werden. Beispielsweise rücken die Hebel 21 im oberen Bereich der Umlaufbahn U1 enger zusammen und im unteren Bereich weiter auseinander, wenn b vergrössert wird.

Im Anwendungsfall sind die Rotationskörper 31, 43 durch die Motoren 33, 44 synchron angetrieben. Im Fall von Fig. 1a haben die Wirkelemente 22 während der Bewegung entlang der gesamten Umlaufbahn U1 jeweils einen konstanten Abstand d voneinander. Bei Fig. 1b verändert sich der Abstand d' benachbarter Wirkelemente 22 während der Bewegung, wobei der jeweils eingenommene Maximal- und Minimalabstand sowie der Abstand d' an einer beliebigen Referenzstelle bzw. in einem beliebigen Referenzbereich durch die variable Exzentrizität b der beiden Achsen A1, A2 vorgegeben ist.

Fig. 3 zeigt eine alternative Gestaltung des Führungsmechanismus und der Hebel 21 in einer Ansicht senkrecht zur Drehachse A1. Das Gelenk 25 zwischen den Hebeln 21 und dem Rotationskörper 31 ist nach Art eines Kniegelenks ausgebildet. Die Führungselemente 42 sind hier als Manschetten ausgebildet, die um den Hebel 21 greifen und entlang der Hebelachse gleiten können.

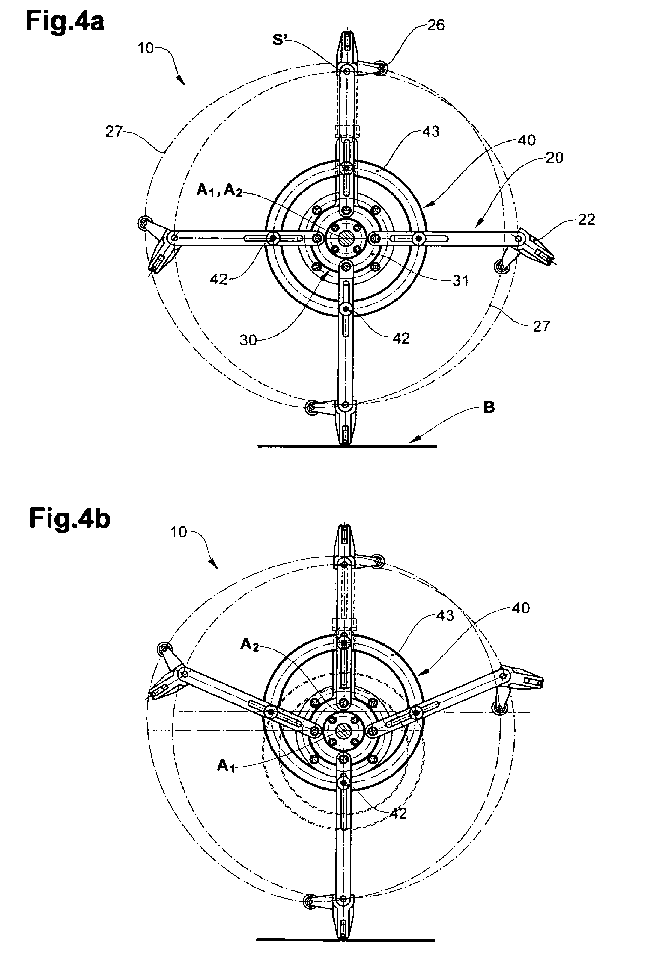

Fig. 4a+b zeigt ein weiteres Beispiel für eine Bearbeitungsvorrichtung 10 auf der Basis eines Rotationskörpers 31 als Teil des Werkzeug-Antriebsmittels 30 mit hier vier Werkzeugen 20. Diese sind im Wesentlichen analog zu den Werkzeugen gemäss Fig. 1a+b gestaltet mit der Ausnahme, dass die Wirkelemente 22 nicht starr, sondern um parallel zur Drehachse A1 verlaufende Schwenkachsen S' schwenkbar am aussen liegenden Hebelende angebracht sind. Die Wirkelemente 22 sind ausserdem mit einem weiteren Führungselement 26 gekoppelt, mit dem die Orientierung der Wirkelemente 22 relativ zum Hebel 21 eingestellt werden kann. Hierzu wird beispielsweise eine Steuerkulisse 27 verwendet, die ganz oder nur in Teilbereichen der Umlaufbahn auf die weiteren Führungselemente 26 wirkt. Diese Variante ermöglicht es, die Orientierung der Wirkelemente 22 in einem Bearbeitungsbereich in gewissen Grenzen frei zu wählen, beispielsweise zur Geradesteuerung der Wirkelemente 22 in einem nicht nur punktförmigen Bereich.

Fig. 4a zeigt den Führungsmechanismus in einer mittleren (konzentrischen) Stellung; Fig. 4b zeigt ihn in seiner oberen Extrempositionen (untere Extremposition gestrichelt).

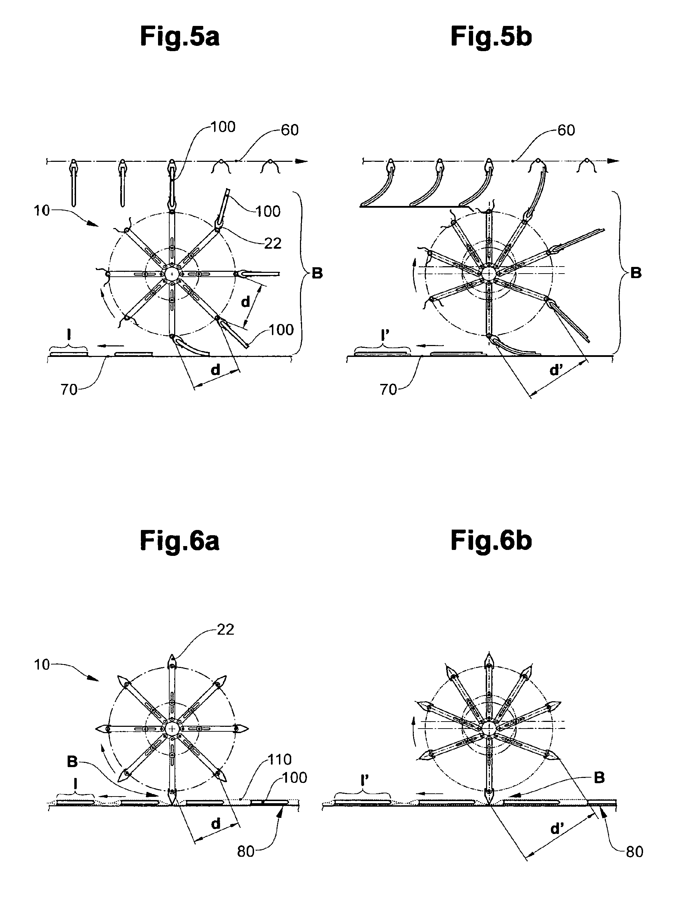

Fig 5a+b und 6a+b zeigen Anwendungsbeispiele für die oben beschriebene Vorrichtung.

In Fig. 5a+b ist gezeigt, wie Produkte 100 durch eine als Transferförderer eingesetzte erfindungsgemässe Vorrichtung aus einer kompakten Formation vereinzelt werden. Die Wirkelemente 22 sind hier als Greifer ausgebildet und übernehmen die hängend von einer Zufördereinrichtung 60 in dichter Folge kontinuierlich herbeigeförderten Produkte 100. Sie legen diese hintereinander auf einer Wegfördereinrichtung 70 in Form eines Förderbands ab. Der gesamte Bereich, in dem die Vorrichtung 10 fördernd wirkt, ist als Bearbeitungsbereich B bezeichnet. Der Abstand d der Wirkelemente 22 ist an der Abgabestelle am unteren Scheitelpunkt der Umlaufbahn U1 an den gewünschten Produktabstand, der etwa der Produktlänge 1 entspricht, angepasst. Zur Umstellung auf ein grösseres Produktformat 1' werden die Abstände der Wirkelemente 22 im unteren Bereich der Vorrichtung 10 durch Verschieben des Führungsmechanismus vergrössert und die Fördergeschwindigkeit der Wegfördereinrichtung 70 an die vergrösserte Bahngeschwindigkeit angepasst, so dass die Produkte 100 hintereinander auf dem Förderband zu liegen kommen. Die Förderraten bleiben gleich.

Fig. 6a+b zeigt die Bearbeitung einer auf einer Fördereinrichtung 80 geförderten Folienbahn 110 mit darin eingehüllten Produkten 100 für zwei verschiedene Produktlängen 1, 1'. Die Wirkelemente 22 sind beispielsweise Schweissbalken. Im Fall von Fig. 6a sind die Abstände d der Wirkelemente 22 im Bearbeitungsbereich B an die kürzere Produktlänge 1, die auch den Schweissabstand bestimmt, angepasst. Im Fall von Fig. 6b sind sie durch Verstellung des hier nicht gezeigten Führungsmechanismus an die längere Produktlänge 1` (Abstand d') angepasst.

Beim Schweissen wie bei anderen Bearbeitungen, die nicht nur punktuell sind, ist es wichtig, dass möglichst keine Relativgeschwindigkeiten zwischen dem zu bearbeitenden Gegenstand und dem Werkzeug auftreten. Die Antriebsgeschwindigkeit der Bearbeitungsvorrichtung 10 wird daher bei einer Veränderung der eingestellten Abstände d, d' so angepasst, dass die Bahngeschwindigkeit der Wirkelemente 22 im Bearbeitungsbereich B etwa der Fördergeschwindigkeit der Fördereinrichtung 80 entspricht. Bei einer Vergrösserung der Bearbeitungsabstände erhöht sich die Bahngeschwindigkeit im Bearbeitungsbereich, und die Antriebsgeschwindigkeit muss daher reduziert werden. Dieses wird vorzugsweise mit einer geeigneten Steuereinrichtung erreicht.

Vorzugsweise ist die Steuereinrichtung auch imstande, die relativen Positionen des Führungsmechanismus 40 relativ zum Werkzeug-Antriebsmittel 30, also beispielsweise den Abstand b der Achsen A1, A2, so einzustellen, dass die Wirkelemente 22 im Bearbeitungsbereich B ein vorgegebenen Soll-Abstand einnehmen.

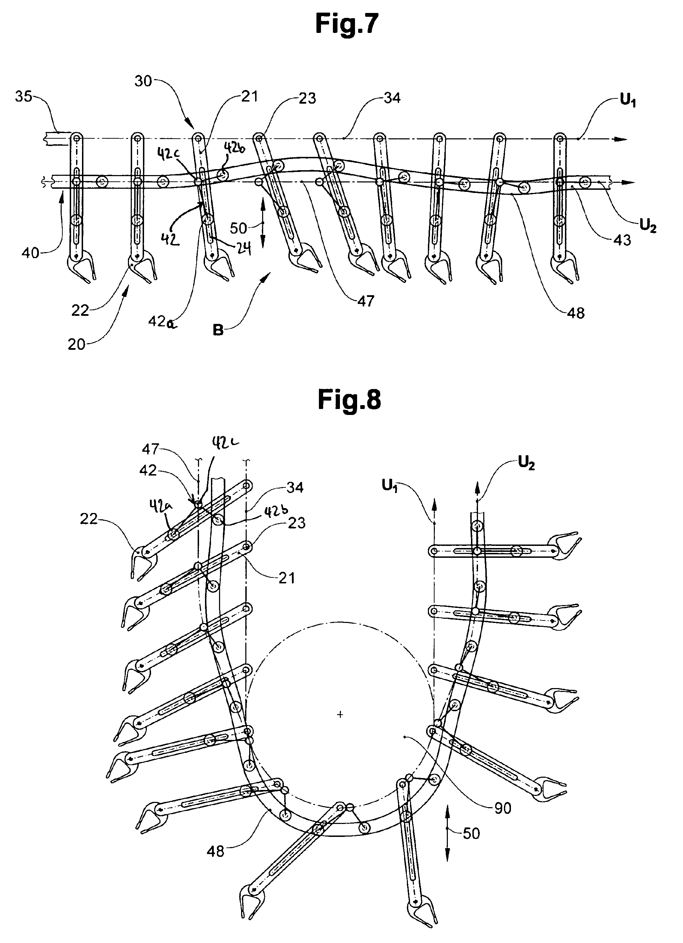

Fig. 7+8 zeigen zwei Beispiele für eine erfindungsgemässe Vorrichtung mit einem flexiblen ersten Förderorgan 34 als Teil des Werkzeug-Antriebsmittels 30 und einem zweiten Förderorgan 47 als Teil des Führungselemente-Antriebsmittels 41, mit dem die Werkzeuge 20 bzw. die Führungselemente 42 durch geeignete Antriebe entlang von (hier nur ausschnittweise gezeigten), durch geeignete Führungsorgane definierte geschlossenen Umlaufbahnen U1 bzw. U2 bewegt werden (es ist nur das Führungsorgan 35 für die Umlaufbahn U1 gezeigt). Die Förderorgane 34, 47 sind beispielsweise Ketten und die Führungsorgane daran angepasste Kanäle. Die Werkzeuge 20 umfassen wie im obigen Beispiel wenigstens einen länglichen Hebel 21, der an einem Ende am ersten Förderorgan 34 schwenkbar angebracht ist und am anderen Ende das Wirkelement 22 trägt. In Fig. 7+8 sind schematisch Greifer als Wirkelemente 22 gezeigt. Die Lagerpunkte 23, an denen die Hebel 21 gelenkartig mit dem ersten Förderorgan 34 verbunden sind, sind zueinander äquidistant.

Die Orientierung der Hebel 21 relativ zu ihrem Antriebsmittel 30 wird durch die am zweiten Förderorgan 34 angebrachten Führungselemente 42 beeinflusst. Die Führungselemente 42 sind hier L-förmig und tragen eine erste Führungsrolle 42a an einem Schenkel des L sowie eine zweite Führungsrolle 42b am anderen Schenkel. Die Punkte 42c, an denen die Schenkel aufeinander treffen, sind am Führungselemente-Antriebsmittel 41 in konstanten Abständen voneinander angebracht. Die ersten Führungsrollen 42a gleiten jeweils in einem Langloch 24 in den Hebeln 21. Die zweiten Führungsrollen 42b laufen in einer Steuerkulisse 48. Durch die Form der Kulisse 48 ist somit die Orientierung des L-förmigen Führungselements 42 und damit auch die Orientierung der Hebel 21 definiert.

Ein Teil der Steuerkulisse 48 ist mit einem hier nicht gezeigten Verstellmechanismus 50 verschiebbar oder verformbar, so dass sich variable Orientierungen der Hebel 21 und damit auch veränderbare Abstände der Wirkelemente 22 bei unveränderten Bahnen U1, U2 der Antriebsmittel ergeben. Anstatt einer einzigen beispielsweise verschiebbaren Kulisse 48 können auch mehrere durch Weichen verbundene Kulissen vorhanden sein, die je nach Weichenstellung die Umlaufbahn U2 und damit die Abstände beeinflussen.

Fig. 7 demonstriert, dass das erfindungsgemässe Prinzip auch bei einer geraden Lagerpunkte-Umlaufbahn U1 einsetzbar ist, wenn beispielsweise die Umlaufbahn U2 der Führungselemente 42 (bzw. hier der zweiten Steuerrollen 42b) gekrümmt ist.

Fig. 8 zeigt eine Vorrichtung mit ähnlichem Aufbau der Werkzeuge und Führungselemente wie in Fig. 7, jedoch mit einer hier durch eine kreisförmige Umlenkung 90 realisierten gekrümmten Lagerpunkte-Umlaufbahn U1. Im unteren Bereich der Umlenkung 90 werden die Abstände allein durch die Krümmung vergrössert. Durch den nur schematisch angedeuteten Verstellmechanismus 50 kann die Lage der Kulisse 48 verändert werden und damit auch der Abstand der Werkzeuge.

Bei beiden Ausführungen gemäss Fig. 7 und 8 ist es auch möglich, dass die Führungselemente 42 nur in einem Teilbereich der Umlaufbahnen U1, U2 in eine Steuerkulisse 48 hineinlaufen, die mit dem Verstellmechanismus 50 verschiebbar ist. Die Orientierung der Werkzeuge in den übrigen Bereichen der Umlaufbahn U1 ist in diesem Fall nicht fest vorgegeben und stellt sich beispielsweise aufgrund der Schwerkraft ein.

Zum Öffnen und Schliessen der Greifer sind weitere Führungselemente und - kulissen vorhanden, die hier nicht dargestellt sind.

Als Abwandlung der hier gezeigten Vorrichtungen ist auch denkbar, die Führungselemente 42 nicht aktiv anzutreiben, sondern die Orientierung der Hebel 21 auf anderem Wege festzulegen, beispielsweise durch mehrere Führungselemente 42, die in unabhängigen Kulissen geführt sind, oder durch fest mit dem Hebel verbundene Führungselemente 42, die in verstellbaren Kulissen geführt sind.

Es ist auch möglich, durch die Verstellung des Führungsmechanismus nur die Orientierungen, nicht aber die Abstände der Wirkelemente in einem bestimmten Referenzbereich zu verändern, um beispielsweise verschiedene Wirkpositionen einzustellen.

Schliesslich ist es auch möglich, die Konstruktion gemäss Fig. 7+8 ohne einen Verstellmechanismus 50 einzusetzen.

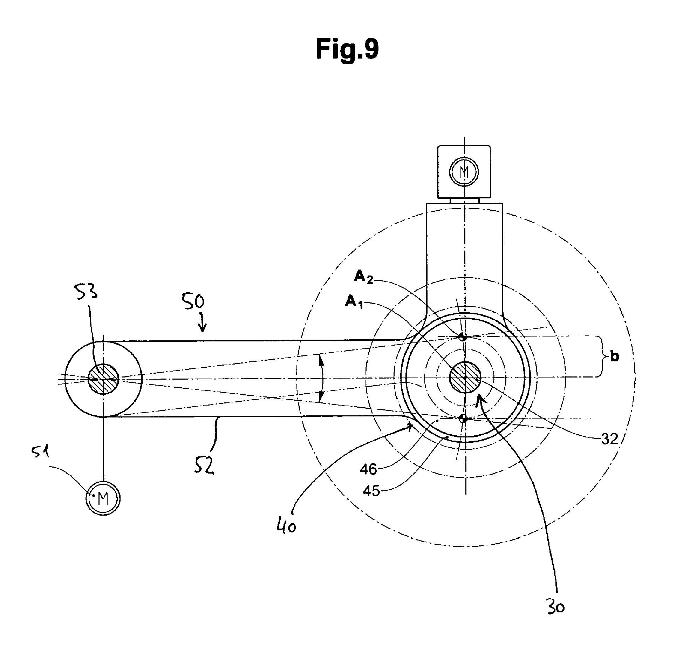

Fig. 9 zeigt ein Beispiel für einen Verstellmechanismus 50, der für eine Vorrichtung gemäss Fig. 1a+b, 2a+b als Alternative zum in Fig. 2a+b gezeigten Linearmotor 51 einsetzbar ist. Die Hohlwelle 45 des Führungsmechanismus 40 ist über einen Hebelarm 52 um eine von der Drehachse A1 beabstandete Achse 53 schwenkbar angeordnet. Wenn der Abstand der Achsen A1 und 53 gross genug gewählt ist, führt dies zu einer nahezu linearen Verschiebung der beiden Achsen A1, A2 von Werkzeug-Antriebsmittel 30 und Führungsmechanismus 40, so dass deren Abstand b und damit der Abstand der Wirkelemente an einem Referenzpunkt eingestellt werden kann.

## Patentansprüche

1. Vorrichtung (10) zur Bearbeitung von Gegenständen (100, 110) mit einer Mehrzahl von Werkzeugen (20) sowie mit einem Werkzeug-Antriebsmittel (30), wobei die Werkzeuge (20) jeweils wenigstens einen Hebel (21) sowie ein Wirkelement (22), das mit dem Gegenstand (100, 110) zusammenzuwirken imstande ist, umfassen, wobei die Hebel (21) am Werkzeug-Antriebsmittel (30) an Lagerpunkten (23) schwenkbar angebracht sind, durch Bewegung des Werkzeug-Antriebsmittels (30) entlang einer geschlossenen Umlaufbahn antreibbar sind und die Wirkelemente (22) vom Lagerpunkt (23) beabstandet angeordnet sind, und mit einem Führungsmechanismus (40), durch den die Schwenkposition der Hebel (21) relativ zum Werkzeug-Antriebsmittel (30) in Abhängigkeit von ihrer Position entlang der Umlaufbahn einstellbar ist, **dadurch gekennzeichnet, dass** der Fühnmgsmechanismus (40) verstellbar ist, wobei durch die Verstellung unterschiedliche Abstände (d, d') benachbarter Wirkelemente (22) in einem vorbestimmten Referenzbereich realisierbar sind.

2. Vorrichtung nach Anspruch 1, **dadurch gekennzeichnet, dass** die Position des Führungsmechanismus (40) relativ zum Werkzeug-Antriebsmittel (30) veränderbar, wobei der Führungsmechanismus (40) insbesondere relativ zum Werkzeug-Antriebsmittel (30) verschiebbar ist.

3. Vorrichtung nach Anspruch 1 oder 2, **dadurch gekennzeichnet, dass** der Führungsmechanismus (40) eine Mehrzahl von Führungselementen (42) aufweist, die mit den Hebeln (21) zusammenwirken und die entlang einer Führungselemente-Umlaufbahn (U2) bewegbar sind, wobei die Form und/oder Lage der Führungselemente-Umlaufbahn (U2) relativ zur Position einer Lagerpunkte-Umlaufbahn (U1) durch Verstellung des Führungsmechanismus (40) veränderbar ist.

4. Vorrichtung nach Anspruch 3, **dadurch gekennzeichnet, dass** die Führungselemente (42) in Richtung der Hebelachse verschiebbar am Hebel (21) gelagert sind.

5. Vorrichtung nach Anspruch 3 oder 4, **dadurch gekennzeichnet, dass** ein Führungselemente-Antriebsmittel (41) zum Antreiben der Führungselemente (42) entlang der Führungselemente-Umlaufbahn (U2) vorgesehen ist.

6. Vorrichtung nach Anspruch 5, **dadurch gekennzeichnet, dass** die Lagerpunkte (23) am Werkzeug-Antriebsmittel (30) und die Führungselemente (42) am Führungselemente-Antriebsmittel (41) jeweils in konstanten Abständen angeordnet sind.

7. Vorrichtung nach einem der Ansprüche 5 oder 6, **dadurch gekennzeichnet, dass** das Werkzeug-Antriebsmittel (30) einen um eine erste Drehachse (D1) drehbaren ersten starren Körper (31) und das Führungselemente-Antriebsmittel (41) einen um eine zweite Drehachse (D2) drehbaren zweiten starren Körper (43) umfasst und dass die erste und zweite Drehachse (D1, D2) mit einem einstellbaren Abstand (b) parallel zueinander verlaufen.

8. Vorrichtung nach einem der Ansprüche 5 oder 6, **dadurch gekennzeichnet, dass** das Werkzeug-Antriebsmittel (30) ein länglich-flexibles erstes Förderorgan (34), insbesondere eine Kette oder ein Riemen, sowie wenigstens ein erstes Führungsorgan (35), das die Lagerpunkte-Umlaufbahn (U1) festlegt, umfasst, und dass das Führungselemente-Antriebsmittel (41) ein länglich-flexibles zweites Förderorgan (47), insbesondere eine Kette oder ein Riemen, sowie wenigstens ein zweites Führungsorgan (48), das die Führungselemente-Umlaufbahn (U2) wenigstens bereichsweise festlegt, umfasst.

9. Vorrichtung nach Anspruch 8, **dadurch gekennzeichnet, dass** das zweite Führungsorgan (48) eine verstellbare Steuerkulisse umfasst.

10. Vorrichtung nach einem der Ansprüche 5 bis 9, **gekennzeichnet durch** jeweils einen oder einen gemeinsamen Antrieb (33, 44) zum synchronen Antreiben des Werkzeug-Antriebsmittels (30) und des Führungselemente-Antriebsmittels (41).

11. Vorrichtung nach einem der vorangegangenen Ansprüche, **dadurch gekennzeichnet, dass** die Wirkelemente (22) als Bearbeitungselemente ausgebildet sind, die den Gegenstand zu verändern imstande sind, insbesondere Schweisselemente, Heftelemente, Klebelemente, oder dass die Wirkelemente (22) als Förderelemente ausgebildet sind, die den Gegenstand aufzunehmen und entlang der Umlaufbahn zu fördern imstande sind, insbesondere Greifer.

12. Vorrichtung nach einem der vorangegangenen Ansprüche, **gekennzeichnet durch** eine Steuereinrichtung, die imstande ist, den Führungsmechanismus gemäss eines Soll-Abstands der Wirkelemente im Bearbeitungsbereich einzustellen.

13. Verfahren zum Bearbeiten von Gegenständen mit einer Vorrichtung nach einem der vorangegangenen Ansprüche, wobei die Hebel (21) und die Wirkelemente (22) entlang der geschlossenen Umlaufbahn durch einen Bearbeitungsbereich (B) bewegt werden und wenigstens im Bearbeitungsbereich (B) auf die Gegenstände einwirken, **dadurch gekennzeichnet, dass** die Abstände (d, d') der Wirkelemente (22) im Bearbeitungsbereich (B) angepasst werden, indem der Führungsmechanismus (40) verstellt wird, insbesondere dessen Position relativ zum Werkzeug-Antriebsmittel (30) verändert wird.

14. Verfahren nach Anspruch 13, **dadurch gekennzeichnet, dass** zu bearbeitende Gegenstände (100, 110) mit einer Fördereinrichtung (80) durch den Bearbeitungsbereich (B) gefördert und durch Einwirken der als Bearbeitungselemente ausgebildeten Wirkelemente (22) bearbeitet werden, wobei die Geschwindigkeit und der Abstand der Wirkelemente im Bearbeitungsbereich an die Geschwindigkeit und den Abstand der Gegenstände (100, 110) auf der Fördereinrichtung (80) angepasst ist.

15. Verfahren nach Anspruch 13, **dadurch gekennzeichnet, dass** die Gegenstände (100, 110) mit einer Zufördereinrichtung (60) in den Bearbeitungsbereich (B) gefördert und dort an die als Förderelemente ausgebildeten Wirkelemente (22) übergeben und mit einem vorbestimmten Abstand oder unter Vornahme einer vorbestimmten Abstandsänderung durch den Bearbeitungsbereich (B) gefördert und an eine Wegfördereinrichtung (70) übergeben werden.
